# EUROPÄISCHE PATENTSCHRIFT

(11) **EP 0 827 806 B1**
(45) Veröffentlichungstag und Bekanntmachung des Hinweises auf die Patenterteilung: **20.02.2002**
(21) Anmeldenummer: 97115581.7
(22) Anmeldetag: 09.09.1997
(51) Int. Cl.: B23Q 1/00, B23Q 11/00

(54) **Spannzylinder zum Spannen eines Einzugsnippels, Einzugsnippel hierfür und Spannsystem zur Verwendung unter Späneflug**
Clamping cylinder for clamping a clamping bolt, clamping bolt therefor and clamping system to be used with fallen chips
Cylindre de serrage pour serrer un boulon de serrage, boulon de serrage associé et système de serrage pour l'utilisation avec copeaux tombant

(30) Priorität: 09.09.1996 DE 19636375
(43) Veröffentlichungstag der Anmeldung: 11.03.1998
(73) Patentinhaber: Stark Werkzeuggesellschaft mbH, 6840 Götzis (AT)
(72) Erfinder: Stark Werkzeuggesellschaft mbH, 6840 Götzis (AT)
(74) Vertreter: Bischof, Hans-Jochen, Dipl.-Ing.

(56) Entgegenhaltungen:
- EP-A- 0 282 417
- EP-A- 0 291 482
- US-A- 4 577 847

## Beschreibung

Gegenstand der Erfindung sind ein Spannzylinder, ein Einzugsnippel und ein Spannsystem, bestehend aus einem .Spannzylinder und einem Einzugsnippel, wobei der Einzugsnippel geometrisch reproduzierbar in genau definierter Lage von dem Spannzylinder einziehbar ist.

Eine ähnliches Spannsystem ist beispielsweise mit der auf den gleichen Anmelder zurückgehenden DE 41 35 418 bekannt geworden. Dieses Spannsystem wird von einem Schnellverschluß und einem Nippel gebildet. Der Nippel wird an einer Palette oder direkt an einem Werkstück befestigt und dient gleichzeitig zum Einziehen und Festspannen und zum Ausrichten der Palette bzw. des Werkstücks. Selbstverständlich können mehrere Nippel und entsprechend mehrere Schnellspannzylinder vorgesehen sein.

Derartige Spannsysteme werden für das Festlegen von Paletten an Werkzeugmaschinen verwendet. Der oder die Schnellverschlüsse werden an dem Tisch der Maschine befestigt, während die Palette entsprechend mit Einzugsnippeln bestückt wird. Bei großen Werkstücken können, wie gesagt, die Nippel auch direkt in diesen verankert werden, ohne Verwendung einer Palette.

Diese Konstruktion hat einen wesentlichen Vorteil gegenüber bekannten Spannsystemen. Die Schnellverschlüsse werden einmal angebracht und können dann verbleiben. Da die Palette bzw. das Werkstück dann stets in genau definierter Lage eingespannt werden, ist ein Ausrichten an der Maschine selbst nicht mehr erforderlich. Die Werkstücke müssen nur gegenüber der Palette selbst, genauer gesagt gegenüber den Befestigungsstellen der Nippel, positioniert werden und liegen dann in genau bekannter Lage gegenüber der Werkzeugmaschine vor. Ausgehend von einem definierten Nullpunkt an der Werkzeugmaschine kann so praktisch ohne Zeitaufwand nullpunkt-orientiert gespannt werden.

Die Ausführung nach der DE 41 35 418 war nicht sehr gut gegen Eindringen von Schmutz, Späne und Wasser abgedichtet. Damit bestand der Nachteil, daß von oben (aus dem Bearbeitungsbereich her) Schmieröl, Späne und Kühlflüssigkeit nach unten fließen, in das Spannsystem eindringen und dieses schließlich unbrauchbar machen.

Insbesondere ist gewöhnlich bei Bearbeitungszentren oder Transferstraßen keine Zeit, dieses Spannsystem zwischen den Bearbeitungsvorgängen zu reinigen. Von daher ist mit einer stetig zunehmenden Verschmutzung zu rechnen, die früher oder später zum Stillstand führt. Gerade bei spanabhebender Bearbeitung besteht weiter die große Gefahr, daß sich am Spannzylinder Späne ablagern, die ein Einziehen und Zentrieren des Nippels verhindern.

Zwar ist aus dem Stande der Technik die EP 0 282 417 (siehe Oberbegriff der Ansprüche 1 und 10) bekannt, die ein Verriegelungssystem zeigt, dieses ist jedoch für die Verankerung von Robotterarmen konstruiert, und erfordert die unbedingte Freihaltung des Spannsystems (Verriegelungszylinder / Verriegelungsnippel) vor Verunreinigungen. Somit ist ein Einsatz unter extrem rauen Bedingungen, wie sie in Transferstraßen üblich sind, für diese Vorrichtung nicht möglich.

Aus der US 4,577,847 geht eine Spannvorrichtung für Werkzeugtische und dgl. hervor, welche jedoch ebenfalls vor Verunreinigungen geschützt werden muß um funktionsfähig zu bleiben. Somit gilt auch für diese technische Lehre, daß sie nicht den Anforderungen entspricht, die einen einwandfreien Betrieb in einer Transferstraße ermöglichen.

Der vorliegenden Erfindung liegt deshalb die Aufgabe zugrunde, ein Spannsystem der eingangs genannten Art so weiterzubilden, daß es zum einen unanfällig gegen das Eindringen von Spänen, Schmutz und Wasser aller Arten ist und zum anderen, daß eine Reinigung selbst nicht mehr erforderlich ist.

Diese Aufgabe wird erfindungsgemäß durch die technische Lehre der unabhängigen Ansprüche gelöst.

Der Spannzylinder ist erfindungsgemäß mit einer mittigen, durchgehenden und abgedichteten Ausnehmung versehen. Eventuell einfallende Verschmutzungen können sich daher nicht in dieser Ausnehmung sammeln, sondern fallen nach unten fort. Die Abichtung verhindert ein Eindringen von Verschmutzungen in den Innenraum. Zusätzlich kann eine Spülung für diese Ausnehmung vorhanden sein, um eventuell haftende Partikel oder Späne zu entfernen. Es kann für die Spülung Druckluft verwendet werden, aber auch ein Kühlschmiermittel oder ein Hydrauliköl. In den beiden letzten Fällen ist die Ausnehmung mit einem Sammelbehälter für die Reinigung und Rückgewinnung des Spülmediums gekoppelt.

Somit wird ein stetiges Verschmutzen der Ausnehmung, in der auch der Einzugsnippel aufgenommen wird, verhindert.

Zum Einziehen und Festhalten des Einzugsnippels sind bevorzugt Verriegelungskolben vorgesehen, die über den Umfang der Ausnehmung verteilt sind. Diese sind fast unempfindlich gegenüber Verschmutzung.

Die Verriegelungskolben sind mit einer Schneideinrichtung versehen. Sollte ein Span an dem Einzugsnippel oder einem der Verriegelungskolben haften und nicht von allein oder durch die Spülung abfallen, wird er dann beim Einziehen zerteilt und fällt ab.

Zur Betätigung der Verriegelungskolben ist ein in dem Spannzylinder verschieblich gelagerter Kolben vorgesehen, der in die Einziehstellung mittels Federkraft und zum Lösen über eine Hydraulikflüssigkeit beaufschlagt wird. Dieser Kolben wirkt auf Schrägflächen der Verriegelungskolben und drückt diese beim Einziehen radial nach innen. Zum Lösen der Verriegelungskolben sind diese über Federn vorgespannt.

Neben dem erwähnten Kolben sind in einer.bevorzugten Bauform noch weitere, radial einwärts dieses ersten Kolbens liegende, weitere Kolben vorhanden. Diese dienen zum Lösen der Verriegelungskolben, falls die Federkraft nicht ausreichend sein sollte.

Ein Einzugsnippel, der speziell für die Verwendung zusammen mit dem vorstehend beschrieben Spannzylinder konzipert ist, aber auch mit anderen Spannzylindern zusammen verwendet werden kann, weist mindestens eine Schneideinrichtung auf. Diese Schneideinrichtung dient wiederum zum Zerteilen von Spänen, die zwischen dem Einzugsnippel und dem Spannzylinder liegen, z.B. an dessen Oberseite. Auch hier erfolgt ein Zerteilen der Späne, die dann abfallen bzw. abspringen und leicht abtransportiert werden können.

Die Schneideinrichtung muß nicht zwingend in unmittelbarer radialer Nähe der Mittelachse des Einzugsnippels angeordnet sein. Sie kann selbstverständlich auch mit einem relativ großen radialen Abstand vorhanden sein. Zu diesem Zweck wird der Einzugsnippel entsprechend im Durchmesser vergrößert.

In einer Weiterbildung ist vorgesehen, die Zentrieransätze oder den Zentrierbund ebenfalls als Schneideinrichtung auszubilden. In diesem Fall ist von der vorliegenden Erfindung auch umfaßt, daß die oben genannte Schneideinrichtung nicht mit dem Einzugsnippel verbunden, sondern als getrenntes Teil, z.B. in Form eines umlaufenden Rings, ausgebildet ist. Dieser Ring wird bevorzugt leicht exzentrisch zu dem Einzugsnippel angebracht, so daß bei jedem Aufsetzen eine andere Berührstelle am Spannzylinder belastet wird.

Die Berührstelle ist vorteilhaft als Verschleißteil konzipiert und leicht auswechselbar, unabhängig von der Konstruktion der Schneideinrichtung.

Der Einzugsnippel weist einen Ansatz auf, der als Anlagefläche für die Verriegelungskolben des Spannzylinders dient. Die Dimensionen sind hierbei genau abgestimmt, so daß der Einzugsnippel stets in einer bestimmten Höhe arretiert wird und dadurch einen Nullpunkt in vertikaler Richtung sicherstellt. Der Einzugsnippel ist weiter mit einem Zentrieransatz versehen, der ihn zentrisch in der Ausnehmung des Spannzylinders ausrichtet. So wird ein Nullpunkt in horizontaler Richtung sichergestellt.

An seiner Oberseite ist der Einzugsnippel bevorzugt mit einem Ansatz versehen, mit dem er in einer zugehörigen Bohrung z.B. in einer Palette zentriert werden kann. Als vertikaler Anschlag dient ein umlaufender Flansch, der an seiner Unterseite bevorzugt bereits die erste Schneideinrichtung trägt. Die Erfindung ist nicht auf die Verwendung einer Palette oder Lochrasterpalette beschränkt. Es kann auch eine Befestigung an einer Schraubstockpalette, einer Sondervorrichtung oder direkt am Werkstück erfolgen.

Zur Befestigung ist der Einzugsnippel mit einer Durchgangsbohrung versehen, die von einer Schraube durchgriffen wird. Diese Schraube wird durch den Einzugsnippel hindurch in die Palette bzw. das Werkstück eingeschraubt und sichert so den Einzugsnippel. Sollte dieser brechen, besteht noch eine gewisse Restsicherheit durch die Schraube. Selbstverständlich ist auch jede andere geeignete Art von Befestigung möglich.

Insbesondere ist es möglich, den Einzugsnippel mit mehreren über seinen Umfang verteilten Bohrungen zu versehen, durch die dann entsprechende Schrauben greifen. Die Zentrierung erfolgt unverändert über den genannten Ansatz. Mit dieser Befestigungsart wird, insbesondere bei großen Einzugsnippeln, eine sehr große Anpreßkraft erreicht.

An seiner Unterseite kann der Einzugsnippel mit einer Scheibe versehen sein. Diese Scheibe hat mehrere Funktionen: Zuerst verhindert sie, daß von der Schraube eingeleitete Spreizkräfte auf den Einzugsnippel weitergeleitet werden. Weiter ist sie bevorzugt aus einem Material ausgebildet, das weicher ist als der Spannzylinder. Bei Stößen zwischen dem Einzugsnippel und dem Spannzylinder wird somit die Scheibe beschädigt, die leicht ausgewechselt werden kann.

Das erfindungsgemäße Spannsystem besteht aus einer Kombination des erfindungsgemäßen Spannzylinders mit dem erfindungsgemäßen Einzugsnippel.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert.

Es zeigen:
- Figur 1:: Schnitt durch ein Spannsystem nach der Erfindung
- Figur 2:: teilweise Draufsicht auf die Darstellung nach Figur 1 mit teilweise entferntem Deckel und entferntem Einzugsnippel,
- Figur 3:: einen Einzugsnippel nach der Erfindung in Seitenansicht,
- Figur 4:: den Einzugsnippel nach Figur 3 in Draufsicht,
- Figur 5:: eine alternative Ausführungsform eines Einzugsnippels mit daran befestigter Palette, und
- Figur 6:: eine weitere Ausführungsform eines Einzugsnippels im Schnitt,
- Figur 7:: den Einzugsnippel nach Figur 6 in Draufsicht, und
- die Figuren 8 - 13:: jeweils eine Seiten- und eine Vorderansicht drei unterschiedlicher Verriegelungskolben.

### Beschreibung des Einspannens

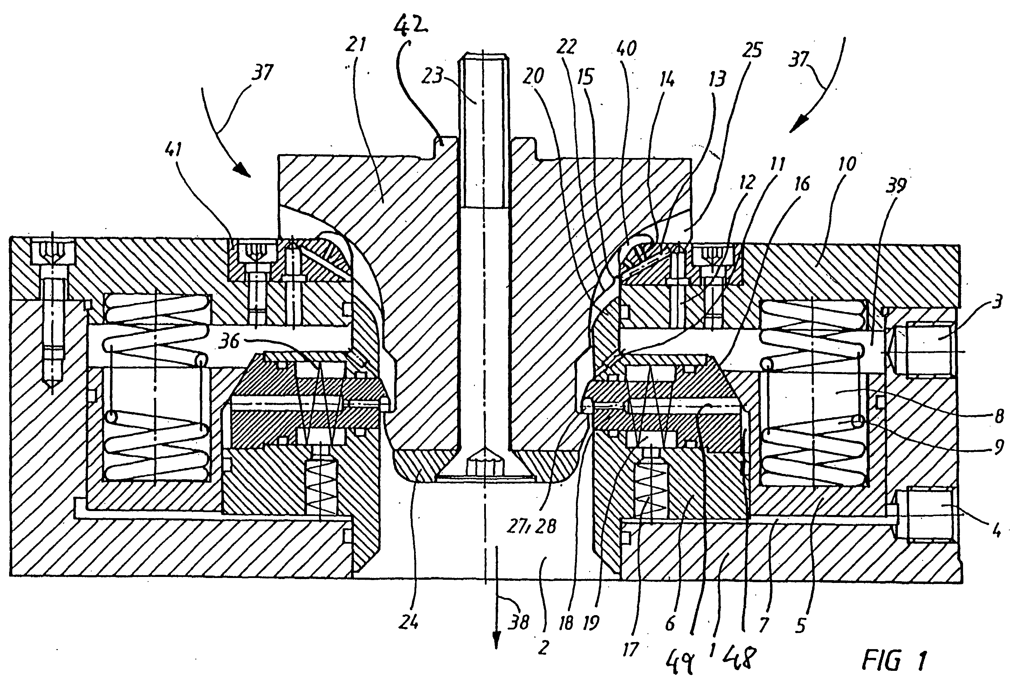

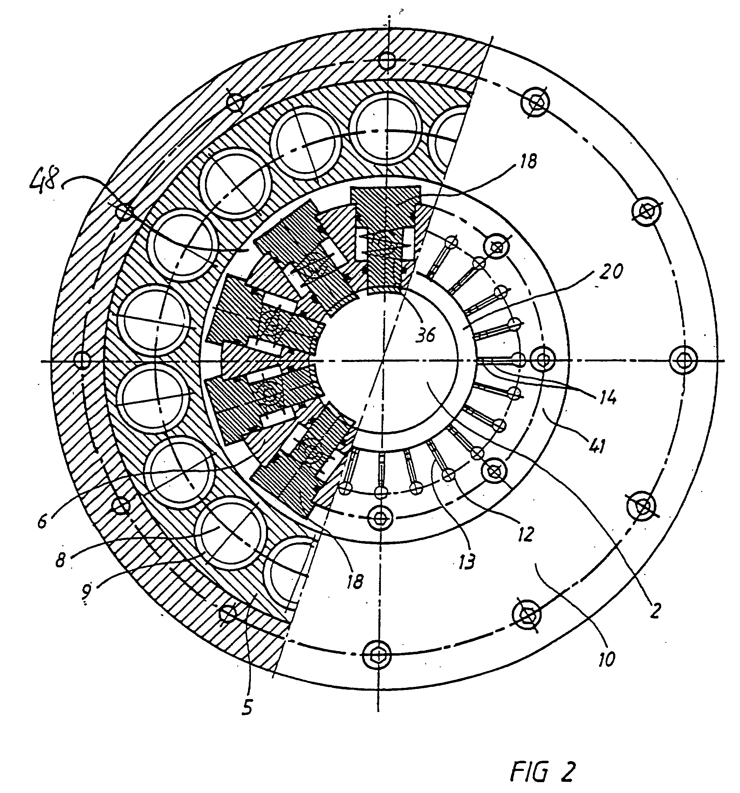

Gemäss den Figuren 1 und 2 weist der Spannzylinder 1 eine zentrale Ausnehmung 2 auf, in welcher zentrisch ein Einzugsnippel 21 angeordnet ist.

Der Einzugsnippel 21 ist in dieser zentralen Ausnehmung 2 verriegelt dargestellt, wobei eine spezielle Kolben-Zylinder-Anordnung die Verriegelungseinrichtung bildet.

Der Spannzylinder 1 besteht im wesentlichen aus einem schalenförmigen Teil, welches seitliche Ringflansche ausbildet, an denen radial Zuführungen 3, 4 für die Luft und das Öl vorhanden sind. Nach oben erfolgt ein Abschluß über einen Deckel 10.

Über die untere Zuführung 4 wird Öl in einen Druckraum 7 zugeführt, der zwischen einer oberen Fläche des Spannzylinders 1 und einer unteren Fläche eines äußeren Kolbens 5 gebildet ist. Der äußere Kolben 5 ist hierbei abgedichtet in dem Spannzylinder 1 geführt und axial beweglich. Über das Öl kann also der Kolben 5 nach oben bewegt werden, während eine Bewegung nach unten mittels einer oder mehrerer Federn 9 erreicht wird, die in zugehörige Bohrungen 8 des Kolbens 5 eingesetzt sind. Selbstverständlich ist auch die Verwendung von Tellerfedern möglich; in diesem Fall werden die Bohrungen 8 zu einer Ringnut zusammengefaßt.

Radial innerhalb des Kolbens 5 ist ein weiterer Kolben 6 vorhanden, der ebenfalls axial verschieblich ist. Der Druckraum 7 setzt sich bis unter diesen Kolben 6 fort und steht in Verbindung mit einem weiteren Druckraum 19, der zwischen dem Kolben 6 und einem Verriegelungskolben 18 ausgebildet ist. Dieser Verriegelungskolben 18 ist über eine Schrägfläche 16 mit dem Kolben 5 gekoppelt. Es sind mehrere über den Umfang verteilte Verriegelungskolben 18 vorhanden, deren Betätigungsweise und Wirkung aber identisch sind (vgl. Fig. 2).

Alle Kolben 5, 6, 18 sind somit axial verstellbar, während der Verriegelungskolben 18 zusätzlich noch radial verstellbar ist. Der Kolben 5 wird hierbei über die Federn 8 nach unten vorgespannt, der Kolben 6 über die Federn 17 nach oben und der Kolben 18 über die Feder 36 radial nach außen.

Durch die Schrägfläche 16 wird bei einer Verschiebung des Kolbens 5 mittels der Federn 9 nach unten der Verriegelungskolben 18 radial einwärts und gleichzeitig nach unten gedrängt. Dies führt gleichzeitig zu einer Verschiebung des Kolbens 6 nach unten. Für ein Verschiebung in Gegenrichtung wird über die Zuführung 4 Öl eingebracht, das in die Druckräume 7, 19 eintritt. Der Kolben 5 wird angehoben, die Kolben 6, 18 werden über die Federkraft nach oben bzw. radial auswärts bewegt. Diese Bewegung wird durch das Öl unterstützt.

An seinem inneren, radialen Ende trägt der Verriegelungskolben 18 einen Anschlag 27. Dieser wird entsprechend obiger Darstellung gleichzeitig radial und axial bewegt. Wird nun ein Einzugsnippel 21 wie in Fig. 1 dargestellt eingesetzt, so legt sich der Anschlag 27 jedes Verriegelungskolbens an einem zugeordneten zugeordneten Absatz 26 des Einzugsnippels 21 an, zieht diesen Einzugsnippel 21 in Pfeilrichtung 38 in die Ausnehmung 2 hinein und verriegelt ihn in der untersten, dargestellten Position. Gleichzeitig ist dieser Anschlag 27 auch noch als Messer 28 ausgebildet.

Beim Lösen erfolgt die oben beschriebene Verschiebung der Kolben 5, 6 und 18. Hierbei legt sich ein Anhebeteil 20 des Kolbens 6 an einem Anschlag 22 des Einzugsnippels 21 an und hebt diesen in Gegenrichtung zur Pfeilrichtung 38 ab. Der Kolben 6 ist mit einem weiteren, nach unten ragenden Flansch versehen. Sowohl das Abhebeteil 20 als auch der Flansch sorgen für eine Abdichtung gegenüber der Bohrung 2, z.B. mittels O-Ringen.

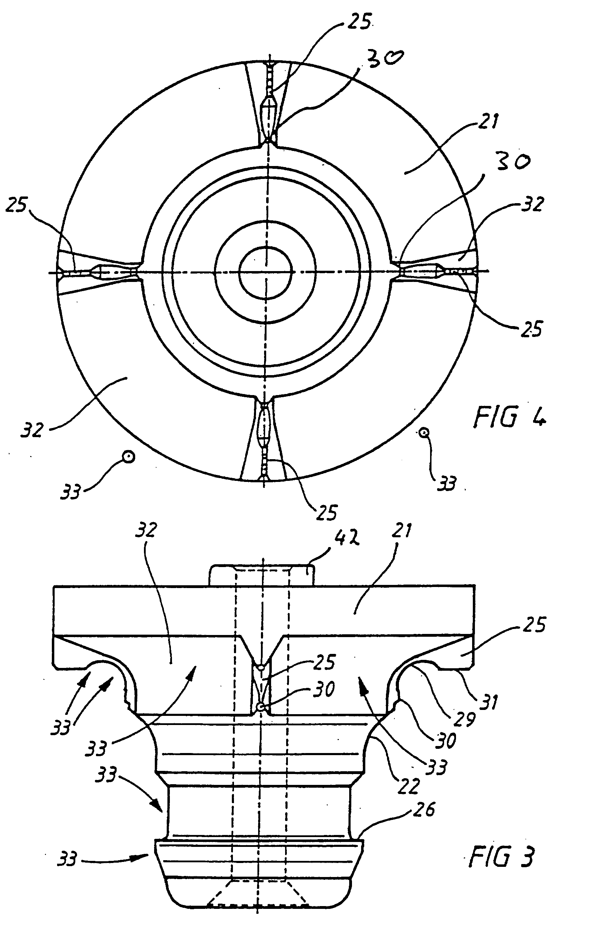

Der Einzugsnippel nach den Figuren 3, 4 weist vier Zentrieransätze 30 auf, die sich an einer zugeordneten Fläche in der Ausnehmung 2 des Spannzylinders 1 anlegen. Diese Zentrieransätze 30 sorgen für eine hochgenaue radiale Ausrichtung des Einzugsnippels 21 gegenüber dem Spannzylinder 1. Der Einzugsnippel 21 ist im wesentlichen symmetrisch zu seier Längsachse ausgebildet.

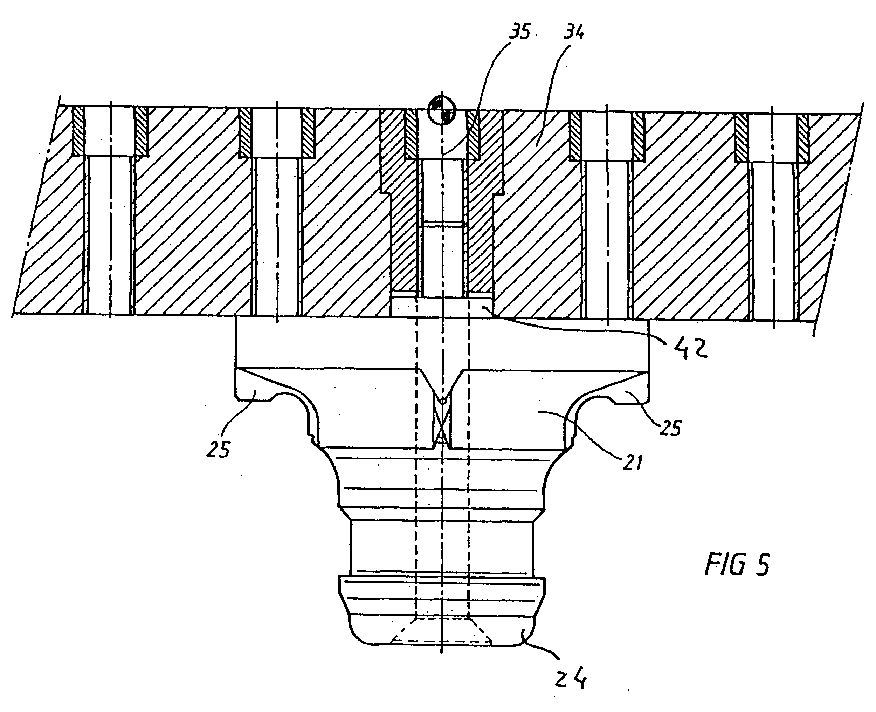

Zur Zentrierung gegenüber einer Palette 34 (Fig. 5) ist der Einzugsnippel 21 mit einem Ansatz 42 versehen. Dieser greift in eine Bohrung der Palette 34 ein. Die Befestigung erfolgt über eine Schraube 23, die den Einzugsnippel 21 durchgreift. Der Einzugsnippel 21 ist mit einer Scheibe 24 versehen, die Spreizkräfte der Schraube 23 aufnimmt, so daß diese praktisch nicht auf den Einzugsnippel 23 wirken. Gleichzeitig dient diese Scheibe 24 als Schutz des Spannzylinders 21, da sie aus relativ weichem Material gebildet ist.

Die Ausrichtung ist hochgenau; es wird eine Nullpunktachse 35 definiert und auch eingehalten, die als Grundlage für die Bearbeitung dient.

### Beschreibung des Zerteilens von Spänen

Neben den bereits genannten Bestandteilen weist der Einzugsnippel 21 nach Fig. 3, 4 noch eine Schneideinrichtung 25 auf. Die Schneideinrichtung 25 ist im wesentlichen am äußeren Umfang des Einzugsnippels 21 in Form mehrerer sich radial erstreckender Schneidkanten ausgebildet. Zwischen den Schneidkanten 25 sind Freiräume ausgebildet, die ein Eintreten von Luft, Öl oder Schmiermittel in die Ausnehmung 2 ermöglichen.

Eine zweite Schneideinrichtung am Einzugsnippel 21 ist an den Zentrieransätzen 30 vorhanden. Diese können mit ihrer Unterkante ebenfalls zerspanen.

Eine dritte Schneideinrichtung ist in Form der Messer 28 an den Anschlägen 27 der Verriegelungskolben 18 realisiert.

Befinden sich im Bereich einer der Schneideinrichtungen 25, 28, 30 Späne, so werden diese durch die jeweilige Schneideinrichtung zuverlässig zerteilt. Der Einzugsnippel 21 kann somit auch bei starker Verschmutzung zuverlässig eingezogen und zentriert werden.

An der radial aussenliegenden, relativ schmal ausgebildeten Schneidkante 25 wird eine schmale Auflage 31 dieser Schneidkante 25 auf dem Luftverteiler 41 des Deckels 10 gebildet. Es ist zeichnerisch nicht dargestellt, daß selbstverständlich auch ein Einzugsnippel größeren Durchmessers zum Einsatz kommen kann. In diesem Fall wäre die erste Schneideinrichtung etwa auf dem Außenumfang des Spannzylinders vorgesehen und, ebenso wie der Luftverteiler 41, leicht auswechselbar.

Radial einwärts dieser Auflage 31 ist eine Ausnehmung 29 angeordnet, die als Hohlraum die zerkleinerten Späne aufnimmt und weiterleitet.

Diese Ausnehmung 29 bildet einen Schmutzfreiraum 40, in dem die Späne über zugeordnete Ausblasöffnungen 14, 15 angeblasen werden und entweder nach oben oder nach unten unter weiterer Zerkleinerung an den messerartigen Auflageflächen weiterbefördert werden.

### Beschreibung der zusätzlichen Reinigung

Es wird im Regelfall nicht erforderlich sein, ständig die Schneideinrichtungen zu beanspruchen. In vielen Fällen können Verschmutzungen durch Luft oder Öl beseitigt werden. Der Schnellspannzylinder 1 ist mit einem entsprechenden Reinigungssystem versehen.

Über die obere Zuführung 3 wird Druckluft oder ein anderes Druckmedium in einen Raum 39 eingeführt. Dieses Druckmedium wird über entsprechende Verteilungsbohrungen den zugeordneten Ausblasöffnungen zugeführt. Eine Ausblasöffnung 11 zweigt von dem Raum 39 ab und mündet in einen zugeordneten, ringsumlaufenden Freistich, welcher als Verteilungskanal 12 bezeichnt wird.

Von diesem Verteilungskanal 12 zweigen dann über eine entsprechende Stichbohrung die Querkanäle 13 ab, wobei jedem Querkanal 13 z.B. zwei Ausblasöffnungen 14, 15 zugeordnet sind.

Hierbei wird in dem Bereich der Ausblasöffnungen 14, 15 ein Schmutzfreiraum 40 gebildet, der dafür sorgt, daß die Mündung der Ausblasöffnungen 14, 15 frei bleibt und sich in diesem Bereich Schmutz niederlassen kann, der dann von den Ausblasöffnungen 14; 15 weggeblasen wird. Die Ausblasöffnungen 14 laufen schräg in den schräg nach unten ragenden Querkanal 13 hinein, um zu vermeiden, daß Wasser in den Raum 39 gelangt, wenn es von oben in Pfeilrichtung 37 anfällt. Dieses Wasser wird zuverlässig über den Querkanal 13 in die zentrale Ausnehmung 2 abgeleitet.

Der Luftverteiler 41, in dem diese Ausblasöffnungen 14, 15 angeordnet sind, ist ein Verschleißteil und schnell auswechselbar.

Von dem Raum 39 münden noch weitere radial schräg nach unten gerichtete Ausblasöffnungen 11 in den Zwischenraum zwischen der Ausnehmung 2 und dem Einzugsnippels 21 in diese Ausnehmung.

Diese Ausblasöffnungen 11 sind auf die Verriegelungskolben 18 gerichtet, und - wie vorhin angegeben - sind deren Flächen ebenfalls als Messer 28 ausgebildet, um an diesem Ort ebenfalls eine Zerkleinerung der Späne zu erreichen und zu vermeiden, daß sich Späne im Bereich der Verriegelungskolben 18 absetzen.

Insgesamt bildet der Einzugsnippel 21 einen ringsumlaufenden Bund 32, der konisch radial einwärts gerichtet ist und an dem die Luft entsprechend in den Pfeilrichtungen 33 entlangströmt und die dort anfallenden Späne und Schmutzlasten unschädlich macht (vgl. auch Fig. 3).

Ein weiteres Ausblasen kann direkt durch die Verriegelungskolben 18 erfolgen. Wie sich aus den Fig. 1, 2 ergibt, ist zwischen den Verriegelungskolben 18 ein Freiraum 48 vorhanden, der sich auch in die Tiefe in den Zwischenraum zwischen den Verriegelungskolben 18 und dem äußeren Kolben 5 erstreckt. Von dort geht eine Bohrung 49 durch jeden Verriegelungskolben 18.

### Beschreibung einer weiteren Ausführungsform

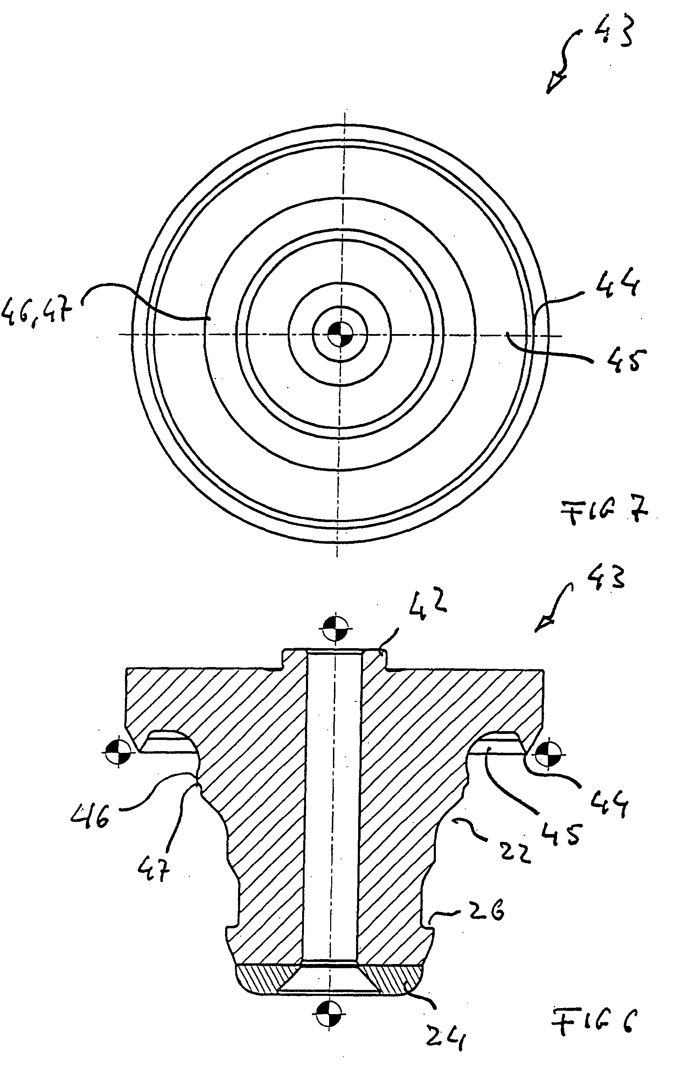

In den Fig. 6, 7 ist eine weitere Ausführungsform eines Einzugsnippels 43 dargestellt. Auf eine Erläuterung baugleicher Teile zu den Fig. 3, 4 wird verzichtet; es werden nachfolgend lediglich die Unterschiede dargestellt. Gleiche Teile sind mit denselben Bezugszeichen wie in den Fig. 3, 4 bezeichnet. Aus Gründen der Vereinfachung ist die Schraube 23 nicht mehr dargestellt.

Der Einzugsnippel 43 weist eine im wesentlichen umlaufende Schneideinrichtung 44 in Form einer Schneidkante auf. Diese Schneidkante 44 kann durchgehend oder unterbrochen sein. Es wird weiter ein Freiraum 45 ausgebildet, der zur Aufnahme von Spänen oder Spanteilen dient.

Das Zentrieren erfolgt über einen Zentrierbund 46, der umlaufend ausgebildet ist. An der Unterseite dieses Zentrierbundes ist eine Schneidkante 47 vorgesehen, die die zweite Schneideinrichtung dieses Einzugsnippels 43 bildet.

Ansonsten entsprechen Funktion und Wirkunsgweise dem Einzugsnippel 21.

### Details der Verriegelungskolben

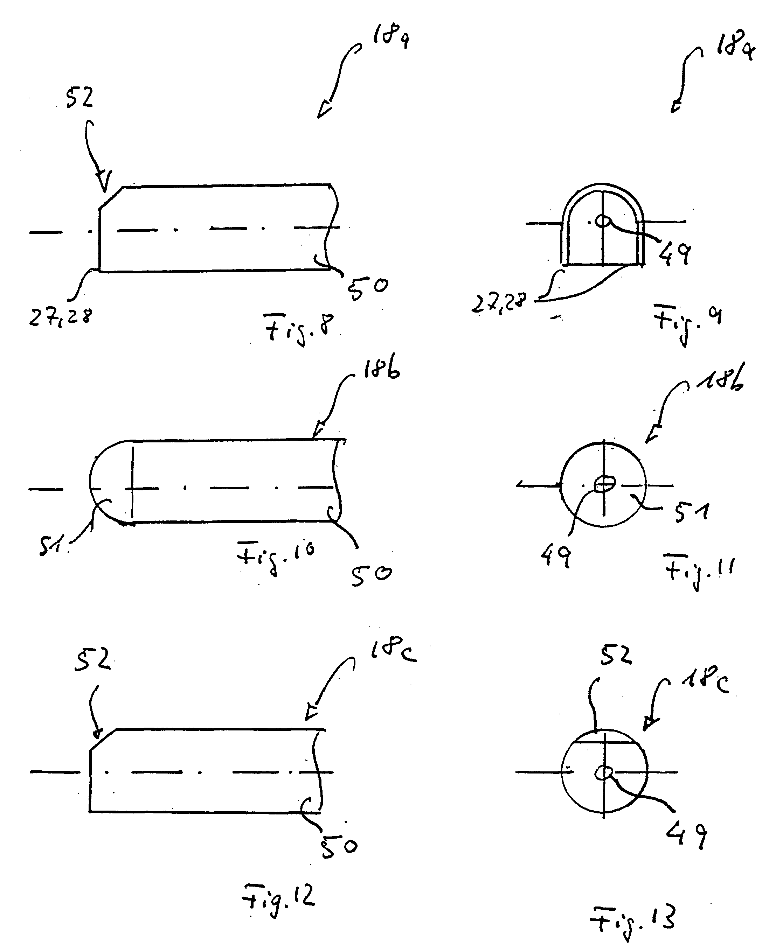

Die Figuren 8 - 13 zeigen drei verschiedene Ausführungsformen für die Verriegelungskolben 18a, 18b, 18c. Der Verriegelungskolben 18a entspricht dem in den Figuren 1, 2 dargestellten. Jeder Verriegelungskolben 18a, 18b, 18c weist einen im wesentlichen runden Schaft 50 auf, durch den die genannte Bohrung 49 zum Ausblasen verläuft.

Der Verriegelungskolben 18a weist an seinem den Einzugsnippel 21 bzw. 43 zugewandten Ende eine Ausfräsung 53 auf, so daß sich zwei schmale Stege bilden, an denen die Anschläge 27 und die Messer 28 gebildet sind. Es kommt somit zu einer flächenhaften Berührung mit dem Absatz 26 des Einzugsnippels 21 bzw. 43.

Der Verriegelungskolben 18b weist an seinem den Einzugsnippel 21 bzw. 43 zugewandten Ende einen Kugelkopf 51 auf. Der Einzugsnippel 21 bzw. 43 ist mit einer im Radius angepaßten Fläche versehen. Es liegt somit eine Linienberührung vor.

Der Verriegelungskolben 18c weist an seinem den Einzugsnippel 21 bzw. 43 zugewandten Ende eine Zylinderform auf. Somit liegt eine Punktberührung mit dem Absatz 26 des Einzugsnippels 21 bzw. 43 vor.

Insgesamt wird erreicht, daß das Spannsystem sehr viel unempfindlicher gegen Verschmutzung wird, nicht mehr manuell gereinigt werden muß und auch unter Späneflug sehr gut einsetzbar ist.

### Zeichnungs-Legende

- 1: Spannzylinder
- 2: Ausnehmung
- 3: Zuführung (Luft)
- 4: Zuführung (öl(-Lösen
- 5: äußere Kolben
- 6: innere Kolben
- 7: Druckraum
- 8: Bohrung
- 9: Feder
- 10: Deckel
- 11: Ausblasöffnung
- 12: Kanal
- 13: Querkanal
- 14: Ausblasöffnung
- 15: "
- 16: Schrägfläche
- 17: Feder
- 18: Verriegelungskolben
- 19: Druckraum
- 20: Anhebeteil
- 21: Einzugsnippel
- 22: Anschlag
- 23: Schraube
- 24: Scheibe
- 25: Schneidkante
- 26: Absatz
- 27: Anschlag
- 28: Messer
- 29: Ausnehmung
- 30: Zentrieransatz
- 31: Auflage
- 32: Bund für Luftströmung
- 33: Pfeilrichtung
- 34: Palette
- 35: Nullpunktachse
- 36: Feder
- 37: Pfeilrichtung (Späne)
- 38: Pfeilrichtung
- 39: Raum
- 40: Schmutzfreiraum
- 41: Luftverteiler
- 42: Ansatz
- 43: Einzugsnippel
- 44: Schneidkante
- 45: Freiraum
- 46: Zentrierbund
- 47: Schneidkante
- 48: Freiraum
- 49: Bohrung
- 50: Schaft
- 51: Kugelkopf
- 52: Fase
- 53: Ausfräsung

## Patentansprüche

1. Spannyzlinder (1) zum geometrisch reproduzierbaren Einspannen eines Einzugsnippel (21, 43), **dadurch gekennzeichnet, daß** der Spannzylinder (1) mit einer mittigen, durchgehenden Ausnehmung (2) versehen ist und die Verriegelungskolben (18) jeweils mindestens ein Messer (28) zum Zerteilen von Spänen, die in die Schneideinrichtung gelangt sind, aufweisen.

2. Spannzylinder nach Anspruch 1, **dadurch gekennzeichnet, daß** mindestens eine Einrichtung (11; 12, 13, 14, 15; 48, 49) zum Einbringen eines Spülmediums in den Bereich der mittleren Ausnehmung (2) vorhanden ist.

3. Spannzylinder nach Anspruch 1 oder 2, **dadurch gekennzeichnet, daß** zum Einziehen des Einzugsnippels (21, 43) mehrere über dessen Umfang verteilte Verriegelungskolben (18) mit einem Anschlag (27) vorgesehen sind.

4. Spannzylinder nach Anspruch 3, **dadurch gekennzeichnet, daß** die Verriegelungskolben (18) hydraulisch betätigbar sind.

5. Spannzylinder nach einem der vorhergehenden Ansprüche, **dadurch gekennzeichnet, daß** zum Einziehen eines Einzugsnippels (21, 43) eine oder mehrere Federn (9) vorgesehen sind, die auf einem in dem Spannzylinder (1) verschieblich gelagerten Kolben (5) wirken.

6. Spannzylinder nach Anspruch 5, **dadurch gekennzeichnet, daß** zum Bewegen des Kolbens (5) entgegen der Kraft der Federn (9) ein Hydraulikmedium zum Einsatz kommt.

7. Spannzylinder nach Anspruch 5 oder 6, **dadurch gekennzeichnet, daß** die Kolben (5) auf eine Schrägfläche (16) der Verriegelungskolben (18) wirken.

8. Spannzylinder nach einem der Ansprüche 5 - 7, **dadurch gekennzeichnet, daß** zusätzlich weitere Kolben (6) vorhanden sind, die radial einwärts der Kolben (5) liegen.

9. Spannzylinder nach Anspruch 8, **dadurch gekennzeichnet, daß** die weiteren Kolben (6) hydraulisch beaufschlagbar sind.

10. Einzugsnippel, insbesondere zur Verwendung mit einem Spannzylinder nach einem der vorhergehenden Ansprüche, mit einer Zentriereinrichtung (30, 46) und einem Absatz (26) zum Einziehen und Verriegein, **dadurch gekennzeichnet, daß** der Einzugsnippel (21, 43) mit mindestens einer Schneideinrichtung (25, 30, 44, 47) versehen ist.

11. Einzugsnippel nach Anspruch 10, **dadurch gekennzeichnet, daß** die Schneideinrichtung (25, 30, 44, 47) umlaufend oder in radialer Richtung ausgebildet ist.

12. Einzugsnippel nach Anspruch 10 oder 11, **dadurch gekennzeichnet, daß** der Einzugsnippel (21, 43) an einer Seite mit einem Ansatz (42) zur Zentrierung in einer Bohrung, insbesondere einer Bohrung in einer Palette (34) versehen ist.

13. Einzugsnippel nach einem der Ansprüche 10 - 12, **dadurch gekennzeichnet, daß** der Einzugsnippel (21, 43) mit einer Durchgangsbohrung zur Aufnahme einer Schraube (23) versehen ist.

14. Einzugsnippel nach Anspruch 13, **dadurch gekennzeichnet, daß** der Einzugsnippel (21, 43) an der dem Ansatz (42) gegenüberliegenden Seite mit einer Scheibe (24) versehen ist, die durch die Schraube (23) gehalten ist.

15. Spannsystem, umfassend einen Spannzylinder (1) und einen Einzugsnippel (21, 43), jeweils nach einem der vorhergehenden Ansprüche.

## Claims

1. Clamping cylinder (1) for clamping a feed fitting (21, 43) in a geometrically reproducible manner, **characterised in that** the clamping cylinder (1) is provided with a central continuous recess and that each of the locking pistons (18) comprises at least one knife (28) for cleaving chips that have arrived in the cutter means.

2. Clamping cylinder according to Claim 1, **characterised in that** at least one means (11; 12, 13, 14, 15; 48, 49) is provided for supplying a flushing medium into the zone of the central recess (2).

3. Clamping cylinder according to Claim 1 or 2, **characterised in that** a plurality of locking pistons (18) with a stop (27) is provided and arranged along the periphery of the fitting for the supply of said feed fitting (21, 43).

4. Clamping cylinder according to Claim 3, **characterised in that** said locking pistons (18) are adapted for hydraulic actuation.

5. Clamping cylinder according to any of the preceding Claims, **characterised in that** one or several spring(s) (9) is/are arranged for the entry of a feed fitting (21, 43), which act upon a piston (5) supported for sliding in the clamping cylinder.

6. Clamping cylinder according to Claim 5 or 6, **characterised in that** hydraulic medium is used to move said piston (5) in opposition to the force of said spring(s) (9).

7. Clamping cylinder according to Claim 5 or 6, **characterised in that** said pistons (5) act upon an oblique surface (16) of said locking pistons (18).

8. Clamping cylinder according to any of the Claims 5 to 7, **characterised in that** further additional pistons (6) are provided which are located at a radially inward position of said pistons (5).

9. Clamping cylinder according to Claim 8, **characterised in that** said further pistons (6) are adapted for being subjected to a hydraulic action.

10. Feed fitting, particularly for use in combination with a clamping cylinder according to any of the preceding Claims, comprising a centring means (30, 46) and a shoulder (26) for being fed and locked, **characterised in that** said feed fitting is provided with at least one cutting means (25, 30, 44, 47).

11. Feed fitting according to Claim 10, **characterised in that** said cutting means (25, 30, 44, 47) is configured for extending along the periphery or in a radial direction.

12. Feed fitting according to Claim 10 or 11, **characterised in that** the feed fitting (21, 43) is provided, on one side, with a projection (42) for being centred in a bore, specifically in a bore in a pallet (34).

13. Feed fitting according to any of the Claims 10 to 12, **characterised in that** the feed fitting (21, 43) is provided with a continuous bore for receiving a screw (23).

14. Feed fitting according to Claim 13, **characterised in that** the feed fitting (21, 43) is provided, on its side opposite to said projection, with a disc (24) held by said screw (23).

15. Clamping system, comprising a clamping cylinder (1) and a feed fitting (21, 43), each according to any of the preceding Claims.

## Revendications

1. Cylindre de serrage (1) à serrer, de façon géométriquement reproduisable, un nipple d'entrée (21, 43), **caractérisé en ce que** le cylindre de serrage (1) est muni d'un évidement central en continu (2), et **en ce que** chacun des pistons de verrouillage (18) comprend au moins un couteau (28) à décomposer des copeaux arrivés dans le moyen coupeur.

2. Cylindre de serrage selon la revendication 1, **caractérisé en ce qu'**au moins un moyen (11; 12, 13, 14, 15; 48, 49) est disposé à introduire un milieu de rinçage dans la zone de l'évidement central (2).

3. Cylindre de serrage selon la revendication 1 ou 2, **caractérisé en ce qu'**une pluralité de pistons de verrouillage (18) à une butée (27) sont disposés est distribués le long de la périphérie du nipple pour l'entrée dudit nipple d'entrée (21, 43).

4. Cylindre de serrage selon la revendication 3, **caractérisé en ce que** lesdits pistons de verrouillage (18) sont aptes à être actionné de façon hydraulique.

5. Cylindre de serrage selon une quelconque des revendications précédentes, **caractérisé en ce qu'**un ou plus ressort(s) (9) est (sont) disposé(s) pour l'entrée d'un nipple d'entrée (21, 43), qui agissent sur un piston (5) logé pour glissement dans le cylindre de serrage.

6. Cylindre de serrage selon la revendication 5 ou 6, **caractérisé en ce qu'**un milieu hydraulique est employé pour le mouvement dudit piston (5) contre la force desdits ressorts (9).

7. Cylindre de serrage selon la revendication 5 ou 6, **caractérisé en ce que** lesdits pistons (5) agissent sur une surface en biais (16) desdits pistons de verrouillage (18).

8. Cylindre de serrage selon une quelconque des revendications 5 à 7, **caractérisé en ce que** des autres pistons (6) additionnels sont disposés, qui se trouvent à une position radialement vers l'intérieur desdits pistons (5).

9. Cylindre de serrage selon la revendication 8, **caractérisé en ce que** lesdits autres pistons (6) sont aptes à être soumis à une action hydraulique.

10. Nipple d'entrée, en particulier pour l'emploi en combinaison avec un cylindre de serrage selon une quelconque des revendications précédentes, comprenant un moyen de centrage (30, 46) et un gradin (26) pour son entrée et son verrouillage, **caractérisé en ce que** ledit nipple d'entrée est muni d'au moins un moyen coupeur (25, 30, 44, 47).

11. Nipple d'entrée selon la revendication 10, **caractérisé en ce que** ledit moyen coupeur (25, 30, 44, 47) est configuré sous forme périphérique ou en un sens radial.

12. Nipple d'entrée selon la revendication 10 ou 11, **caractérisé en ce que** le nipple d'entrée (21, 43) est muni, d'un côté, d'un bout (42) pour son centrage dans un alésage, en particulier dans un alésage dans une palette (34).

13. Nipple d'entrée selon une quelconque des revendications 10 à 12, **caractérisé en ce que** le nipple d'entrée (21, 43) est muni d'un alésage continu à recevoir une vis (23).

14. Nipple d'entrée selon la revendication 13, **caractérisé en ce que** le nipple d'entrée (21, 43), de son côté opposé audit bout, est muni d'un disque (24) qui est tenu par ladite vis (23).

15. Système de serrage, comprenant un cylindre de serrage (1) et un nipple d'entrée (21, 43), chacun selon une quelconque des revendications précédentes.
